# EUROPÄISCHE PATENTSCHRIFT

(11) **EP 1 676 051 B1**
(45) Veröffentlichungstag und Bekanntmachung des Hinweises auf die Patenterteilung: **07.05.2008**
(21) Anmeldenummer: 04765683.0
(22) Anmeldetag: 29.09.2004
(51) Int. Cl.: F16H 3/54, F16D 23/04, F16H 3/78

(54) **PLANETENGETRIEBE**
PLANETARY GEAR
ENGRENAGE PLANETAIRE

(30) Priorität: 21.10.2003 DE 10348755; 21.10.2003 DE 10348757; 24.01.2004 DE 102004003684; 24.01.2004 DE 102004003685
(43) Veröffentlichungstag der Anmeldung: 05.07.2006
(73) Patentinhaber: ZF FRIEDRICHSHAFEN Aktiengesellschaft, 88038 Friedrichshafen (DE)
(72) Erfinder: ECKERT, Harald, 88074 Meckenbeuren (DE); KUCHELMEISTER, Ulrich, Ludwig, 88046 Friedrichshafen (DE); FÖRSTER, Eckhard, 88697 Bermatingen (DE)
(86) Internationale Anmeldenummer: PCT/EP2004/010883
(87) Internationale Veröffentlichungsnummer: WO 2005/050061

(56) Entgegenhaltungen:
- DE-A- 1 775 827
- US-A- 4 976 671
- US-A- 5 390 347
- US-B1- 6 196 944

## Beschreibung

Die vorliegende Erfindung betrifft ein Planetengetriebe, insbesondere für Werkzeugmaschinen, nach dem Oberbegriff des Anspruchs 1.

Derartige Planetengetriebe, die meist als ein- oder mehrstufige Planetengetriebe ausgebildet sind, werden hauptsächlich in Werkzeugmaschinenantrieben sowie in Dreh-, Fräs- und Bearbeitungszentren eingesetzt. Die schaltbaren Planetengetriebe vergrößern die Leistungsbandbreite der Hauptspindelmotoren, um die Flexibilität der Werkzeugmaschinen bei der Bearbeitung von unterschiedlichen Werkstoffen durch hohe Drehmomente oder hohe Drehzahlen zu vergrößern. Die beispielsweise zwei Übersetzungsstufen werden gebildet, indem einerseits die Antriebswelle, die mit einem Sonnenrad verbunden ist, mit einem Hohlrad und andererseits das Hohlrad mit dem Gehäuse gekoppelt werden kann. Ein Planetenträger ist mit der Abtriebswelle verbunden.

Aus der DE A 199 17 673 der Anmelderin ist ein derartiges zweistufiges Planetengetriebe bekannt, mit einer Antriebswelle und mit einer Abtriebswelle, die in einem Gehäuse über Wälzlager gelagert sind. Die Antriebswelle ist mit einem Sonnenrad verbunden, das mit Planetenrädern in Eingriff steht, die auf Planetenbolzen in einem Planetenträger gelagert sind, welcher über eine Formschlussverbindung mit der Abtriebswelle verbunden ist. Die Planetenräder kämmen mit einem Hohlrad, das über ein Wälzlager im Gehäuse oder im Planetenträger drehbar gelagert ist und formschlüssig mit einer Nabe verbunden ist. Die Nabe ist über eine äußere Verzahnung mit einem ersten Teil der Schiebemuffe drehfest verbunden. Auf der Schiebemuffe befindet sich ein Wälzlager. Ferner ist ein äußeres Teil im Gehäuse axial verschiebbar auf einem Lagerbolzen geführt, wobei die axiale Verschiebung vom äußeren Teil auf das Wälzlager übertragen wird.

Die Schiebemuffe kann drei Schaltstellungen einnehmen und zwar eine Neutralstellung, eine erste Schaltstellung, bei der sie das Hohlrad über eine Kuppelverzahnung mit dem Gehäuse koppelt und eine zweite Schaltstellung, bei der das Hohlrad über ein Kuppelteil mit einer Mitnahmeverzahnung und einer Formschlussverbindung mit dem Sonnenrad koppelt. Das Kuppelteil ist dabei mit der Antriebswelle drehfest verbunden.

Die Verschiebung der Schiebemuffe erfolgt hierbei mittels einer Schalteinrichtung, deren Stellglied ein Elektromagnet oder eine Schalteinheit mit Motor ist und dessen Anker triebmäßig mit der Schiebemuffe verbunden ist.

Bei den modernden Werkzeugmaschinen steigen die Anforderungen hinsichtlich Drehzahl, Schwingwerte und Genauigkeit immer mehr an. Das Planetengetriebe, das ein Teil des Werkzeugmaschinenantriebs ist, ist dabei eine mögliche Quelle für Schwingungen, die mit zunehmender Drehzahl ansteigen, wodurch die zu bearbeitende Oberfläche negativ beeinflusst wird.

Die Ursachen für diese Schwingungen beruhen unter anderem auf Unwuchten im Planetengetriebe. Schaltungsteile, wie die Schiebemuffe, benötigen Spiele, damit sie bewegt werden können. Spiele wiederum führen zu einem nicht konzentrischen Lauf, wodurch Unwuchten entstehen. Wird z. B. eine Schiebemuffe mit einem üblichen Gewicht von 1,6 kg nur um 0,1 mm aus der Mittellage bewegt, so liegt die dadurch entstehende Unwucht bereits bei 160 gmm, wodurch extreme Schwingungen auftreten. Auch bei Betrieb des Planetengetriebes mit hohen Drehzahlen (i = 1:1) werden genaue Bearbeitungen der Oberflächen des Werkstückes verlangt, die wiederum nur mit schwingungsarmen Werkzeugmaschinen erreicht werden können.

Aufgabe der vorliegenden Erfindung ist es, ein Planetengetriebe zu schaffen, bei dem bei einer Bearbeitung eines Werkstückes mit hohen Drehzahlen keine oder nur geringfügige Schwingungen auftreten.

Ausgehend von einem Planetengetriebe der eingangs genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Die Erfindung geht also aus von einem Planetengetriebe, insbesondere einem zweistufigen Planetengetriebe für Werkzeugmaschinen, mit einer Antriebswelle, die mit einem Sonnenrad verbunden ist, mit einer Abtriebswelle, die mit einem Planetenträger verbunden ist, mit einem Hohlrad, das in einer ersten Schaltstellung mit dem Gehäuse und das in einer zweiten Schaltstellung mit dem Sonnenrad verbindbar ist, mit einer Nabe, die die Antriebswelle konzentrisch umgibt und mit einer Schiebemuffe, die die Nabe konzentrisch umgibt und die in einer der beiden Schaltstellungen mit der Nabe in Eingriff steht.

Erfindungsgemäß ist dabei vorgesehen, dass die Schiebemuffe an ihrem dem Hohlrad abgewandten Ende mit einem konzentrisch zur Achse der Nabe angeordneten Zentrierabschnitt- versehen ist, der in Eingriffstellung der Schiebemuffe mit der Nabe einen konzentrisch zur Achse der Nabe und auf ihr ausgebildeten Zentrierbund umgreift und auf ihm anliegt.

Diese sogenannte "gefangene" Schiebemuffe, die in der einen Schaltstellung auf dem Zentrierbund der Nabe zum Anliegen kommt, weist den Vorteil auf, dass die Schiebemuffe in dieser Schaltstellung ein erheblich geringeres Spiel zwischen Nabe und Schiebemuffe als herkömmliche Planetengetriebe aufweist, das lediglich aus dem Spiel der Passungen zwischen Zentrierdurchmesser und Zentrierbund besteht. Die bisherige Funktion, nämlich eine formschlüssige Verbindung zwischen Schiebemuffe und Nabe herzustellen, bleibt vollständig aufrecht erhalten.

In weiterer Ausgestaltung der Erfindung ist die mit dem Zentrierbund der Nabe bei Annäherung des Zentrierabschnittmessers der Schiebemuffe zuerst in Berührung kommende, quer zur Verschieberichtung verlaufende Kante des Zentrierabschnitts- mit einer Schräge versehen; desgleichen kann auch die mit dem Zentrierabschnitt bei dessen Annäherung zuerst in Berührung kommende, quer zur Verschieberichtung des Zentrierabschnitts verlaufende Kante des Zentrierbundes mit einer Schräge versehen sein.

Dies bietet den zusätzlichen Vorteil, dass auch bei einem geringen Versatz der Schiebemuffe zur Nabe der Zentrierabschnitt problemlos auf den Zentrierbund auflaufen kann.

Im folgenden wird die Erfindung anhand der Zeichnung näher erläutert, in der ein vorteilhaftes Ausführungsbeispiel eines erfindungsgemäßen Planetengetriebes dargestellt ist.

In der einzigen Figur ist ein Teilschnitt durch ein erfindungsgemäß ausgestaltetes Planetengetriebe dargestellt, das als zweistufige Planetengetriebe ausgebildet ist und für den Einsatz in Werkzeugmaschinen bestimmt ist.

Das Planetengetriebe weist eine Antriebswelle 1 auf, die mit einem Sonnenrad 2 verbunden ist, sowie eine Abtriebswelle 3, die mit einem Planetenträger 10 verbunden ist, wobei eines der Planetenräder mit 11 bezeichnet ist. Sie weist ferner ein Hohlrad 4 auf, das in einer ersten Schaltstellung mit dem Gehäuse 12 des Planetengetriebes verbindbar ist und das in einer zweiten Schaltstellung mit dem Sonnenrad 2 mit Hilfe einer Nabe 6 verbindbar ist. Die Nabe 6 umgibt die Antriebswelle 1 konzentrisch. Mit 5 ist die Schiebemuffe bezeichnet, die das Umschalten zwischen den beiden Schaltstellungen bewirkt. Die Schiebemuffe 5 ist dabei axial auf dem Hohlrad 4 beweglich gelagert.

In der oberen Hälfte in der einzigen Figur befindet sich die Schiebemuffe 5 im Eingriff mit der Bremsscheibe 14, wobei diese Schaltstellung der Übersetzung i > 1 des zwei stufigen Planetengetriebes entspricht.

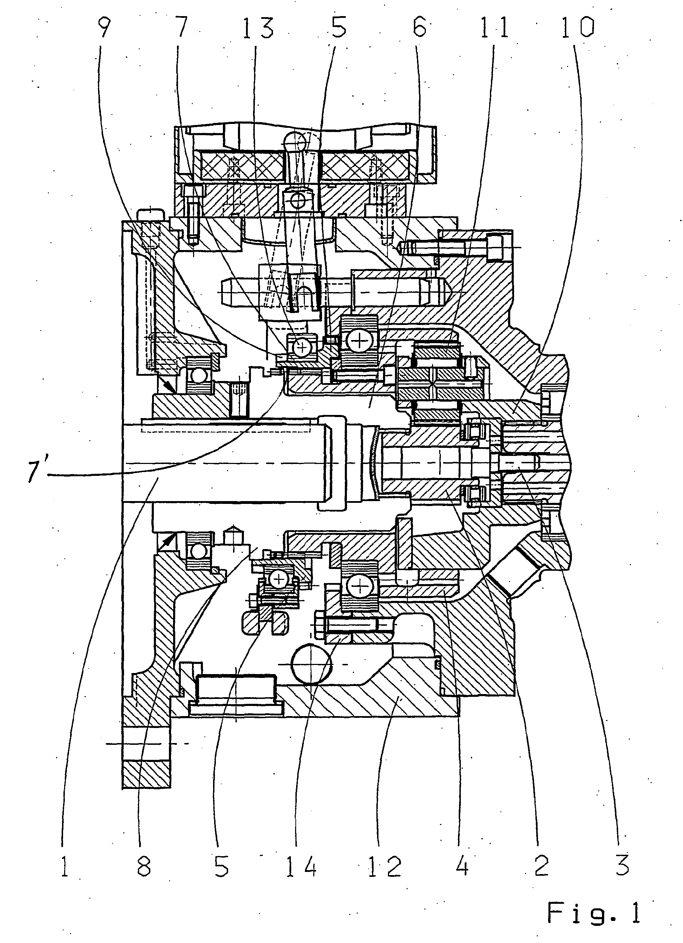

Gemäß der Erfindung ist die Schiebemuffe, 5 an ihrem dem Hohlrad 4 abgewandten Ende mit einem Zentrierabschnitt 7 mit einem konzentrisch zur Nabe 6 angeordneten Zentrierdurchmesser 7' versehen, der, wie es in der untere Hälfte von Figur 1 dargestellt ist, bei i= 1 in Eingriffsstellung der Schiebemuffe 5 mit der Nabe 6 einen konzentrisch zur Achse der Nabe 6 und auf ihr ausgebildeten Zentrierbund 8 umgreift und auf ihm anliegt.

Vorteilhafterweise ist die mit dem Zentrierbund 8 bei Annäherung des Zentrierabschnitt 7 zuerst in Berührung kommende, quer zur Verschieberichtung liegende Kante des Zentrierabschnitts mit einer Schräge versehen; in ebenso vorteilhafter Weise ist die mit dem Zentrierabschnitt 7 bei dessen Annäherung an den Zentrierbund 8 zuerst in Berührung kommende quer zur Verschieberichtung verlaufende Kante des Zentrierbundes mit einer Schräge versehen, sodass bei einem geringfügigen Versatz zwischen Zentrierdurchmesser 7' und Zentrierbund 8 ein problemloses Auflaufen des Zentrierabschnitts auf den Zentrierbund ermöglicht wird.

Das nach dem Umgreifen und dem Anliegen auf dem Zentrierbund 8 zwischen diesem und dem Zentrierdurchmesser 7' bestehende Spiel ist, wie bereits erwähnt, erheblich kleiner als das bei dem herkömmlichen Planetengetriebe bestehende Spiel zwischen Schiebemuffe und Verzahnung des Hohlrades.

Auf der Oberseite des Zentrierabschnitts 7 ist ferner ein Haltering 9 für das Schiebemuffenlager 13 vorgesehen, der vorzugsweise aufgeschrumpft ist. Dieser axial fixierte Haltering 9 sorgt dafür, dass keine zusätzliche Unwucht auftritt.

Es sei noch betont, dass eine Zentrierung zwischen Schiebemuffe 5 und Nabe 6 in der in der Figur oben dargestellten Schaltstellung (i > 1) nicht erforderlich ist, da in dieser Schaltstellung die Schiebemuffe 5 steht und in eine Bremse bzw. Bremsscheibe 14 eingreift.

### Bezugszeichen

- 1: Antriebswelle
- 2: Sonnenrad
- 3: Abtriebswelle
- 4: Hohlrad
- 5: Schiebemuffe
- 6: Nabe
- 7: Zentrierabschnitt
- 7': Zentrierdurchmesser
- 8: Zentrierbund
- 9: Haltering
- 10: Planetenträger
- 11: Planetenrad
- 12: Gehäuse
- 13: Schiebemuffenlager
- 14: Bremsscheibe

## Patentansprüche

1. Planetengetriebe, insbesondere für Werkzeugmaschinen,
- mit einer Antriebswelle (1), die mit einem Sonnenrad (2) verbunden ist,
- mit einer Abtriebswelle (3), die mit einem Planetenträger (10) verbunden ist, und
- mit einem Hohlrad (4), das in einer ersten Schaltstellung mit dem Gehäuse (12) und das in einer zweiten Schaltstellung mit dem Sonnenrad (2) verbindbar ist,
- mit einer Nabe (6), die die Antriebswelle (1) konzentrisch umgibt und
- mit einer Schiebemuffe (5), die die Nabe (6) konzentrisch umgibt und in der zweiten Schaltstellung mit der Nabe (6) in formschlüssigem Eingriff steht,
**dadurch gekennzeichnet, daß**
- die Schiebemuffe (5) an ihrem dem Hohlrad (4) abgewandten Ende mit einem konzentrisch zur Nabe (6) angeordneten und einen Zentrierdurchmesser (7') aufweisenden Zentrierabschnitt (7) versehen ist, der einteilig mit der Schiebemuffe ausgebildet ist,
- wobei der Zentrierabschnitt (7) bei formschlüssiger Eingriffsstellung der Schiebemuffe (5) mit der Nabe (6) einen konzentrisch zur Achse der Nabe (6) auf der Nabe ausgebildeten Zentrierbund (8) umgreift und auf diesem anliegt.

2. Planetengetriebe nach Anspruch 1, **dadurch gekennzeichnet, dass** die mit dem Zentrierbund (8) bei Annäherung des Zentrierabschnitts (7) zuerst in Berührung kommende, quer zur Verschieberichtung des Zentrierabschnitts verlaufende Kante des Zentrierabschnitts mit einer Schräge versehen ist.

3. Planetengetriebe nach Ansprüchen 1 und 2, **dadurch gekennzeichnet, dass** die mit dem Zentrierabschnitt (7) bei Annäherung an der Zentrierbund (8) zuerst in Berührung, quer zur Verschieberichtung des Zentrierabschnitts (7) verlaufende Kante des Zentrierbundes (8) mit einer Schräge versehen ist.

## Claims

1. Planetary gear, especially for machine tools,
- with an input shaft (1) which is connected to a sun gear (2),
- with an output shaft(3)which is connected to a planet carrier (10), and
- mit an internal gear (4)which is connectable in a first shifting position with the housing (12) and in a second shifting position with the sun gear(2),
- with a hub (6) which concentrically surrounds the input shaft (1), and
- with a sliding sleeve (5)which concentrically surrounds the hub (6) and in the second shifting position is positively engaged with the hub (6),
**characterized in that**
- on its end not facing the internal gear (4), the sliding sleeve (5) is provided with a centering section (7) featuring a centering diameter (7')and being concentrically arranged with the hub (6), with this centering section forming a single part with the sliding sleeve;
- with the centering section (7), during positive engagement of the sliding sleeve(5)with the hub(6), surrounding and abutting on a centering collar (8) arranged on the hub concentrically to the axis of the hub (6).

2. Planetary gear according to claim 1, **characterized in that** a bevel is provided on the edge of the centering section running crosswise to the direction of displacement of the centering section and first contacting the centering collar (8) when the centering section (7) approaches.

3. Planetary gear according to claims 1 and 2, **characterized in that** a bevel is provided on the edge of the centering collar (8) running crosswise to the direction of displacement of the centering section (7) and first contacting the centering section (7) when the centering section (7) approaches.

## Revendications

1. Boîte planétaire, en particulier pour machines-outils,
- dotée d'un arbre d'entrée (1), celui-ci étant lié à un planétaire (2),
- dotée d'un arbre de sortie (3), celui-ci étant lié à un arbre porte-satellites (10), et
- dotée d'une couronne (4), celle-ci pouvant être liée dans une première position crabotée au carter (12) et dans sa deuxième position crabotée au planétaire (2),
- dotée d'un moyeu (6), celui-ci entourant concentriquement l'arbre d'entrée (1) et
- dotée d'un manchon coulissant (5), celui-ci entourant le moyeu (6) concentriquement et étant lié à engagement positif dans la deuxième position crabotée au moyeu (6),
**caractérisée en ce que**
- le manchon coulissant (5) comporte sur son extrémité opposé à la couronne (4) une section de centrage (7) disposée concentriquement par rapport au moyeu (6) et comportant un diamètre de centrage (7'), celui-ci étant réalisé de façon à faire corps avec le manchon coulissant,
- sachant que, lorsque le manchon coulissant (5) est craboté avec le moyeu (6), la section de centrage(7)déborde sur un bord de centrage (8) réalisé sur le moyeu et étant disposé concentriquement par rapport à l'axe du moyeu (6), et sachant que la section de centrage appuye sur ce bord de centrage.

2. Boîte planétaire selon la revendication 1, **caractérisée en ce que** l'arête de la section de centrage orientée transversalement par rapport au sens de déplacement de la section de centrage et venant en contact en premier avec le bord de centrage (8) lors du rapprochement de la section de centrage (7) est dotée d'un chanfrein.

3. Boîte planétaire selon les revendications 1 et 2, **caractérisée en ce que** l'arête du bord de centrage (8) orientée transversalement par rapport au sens de déplacement de la section de centrage (7) et venant en contact en premier avec la section de centrage (7) lors du rapprochement du bord de centrage (8) est dotée d'un chanfrein.
